(19) Europäisches Patentamt
European Patent Office
Office européen des brevets

(11) **EP 0 847 165 B1**

(12) **EUROPÄISCHE PATENTSCHRIFT**

(45) Veröffentlichungstag und Bekanntmachung des Hinweises auf die Patenterteilung:
**24.01.2007   Patentblatt 2007/04**

(51) Int Cl.:
*H04L 12/43* *(2006.01)*

(21) Anmeldenummer: **97121122.2**

(22) Anmeldetag: **01.12.1997**

(54) **Digitales Datenübertragungsnetz und Verfahren zum Betreiben des Datenübertragungsnetzes**

Digital data transmission network and method for operating a data transmission network

Réseau de transmission de données digitales et méthode pour activer un réseau de transmission de données

(84) Benannte Vertragsstaaten:
**DE FR GB IT**

(30) Priorität: **05.12.1996   DE 19650525**

(43) Veröffentlichungstag der Anmeldung:
**10.06.1998   Patentblatt 1998/24**

(73) Patentinhaber: **SIEMENS AKTIENGESELLSCHAFT**
**80333 München (DE)**

(72) Erfinder:
• **Marttinen, Tapio, Dr.**
**81379 München (DE)**
• **Korpi, Markku**
**82319 Starnberg (DE)**

(56) Entgegenhaltungen:
**EP-A- 0 462 349          US-A- 4 814 761**
**US-A- 5 090 029**

• **T.HAMADA ET AL.: "Trunk Network: Integrated LAN for Distributed Computer Control" IEEE/ IEICE GLOBAL TELECOMMUNICATIONS CONFERENCE, Bd. 2, 15. - 18.November 1987, TOKYO (JAPAN), Seiten 1427-1431, XP002058853**

**Beschreibung**

Die Erfindung betrifft in einem ersten Aspekt ein Verfahren zum Betreiben eines digitalen Datenübertragungsnetzes, durch welches Steuerungs- und/oder Kommunikationsdaten übertragen werden.

Aus der internationalen Patentanmeldung WO 93/21714 ist ein Verfahren zur Übertragung digitaler Daten bekannt, bei dem eine Steuereinheit und mehrere Nutzereinheiten zu einem Ringnetz verbunden sind. In diesem Ringnetz werden Datenblöcke mit einer vorbestimmten Anzahl von Bitstellen übermittelt. Diese Datenblöcke werden auch als Rahmen oder Datenpakete bezeichnet. In den Datenblöcken gibt es einen Nutzdatenteil, dessen Bitstellen bei der Datenübertragung in Nutzkanälen verwendet werden. In den Nutzkanälen werden z.B. digitale Sprachdaten beim Telefonieren, digitalisierte Videodaten und digitale Daten einer Datenverarbeitungsanlage übermittelt. Über einen Steuerungskanal (Kommandokanal) werden zwischen der Steuereinheit und den Nutzereinheiten bzw. zwischen den Nutzereinheiten untereinander Kommandos ausgetauscht.

Nachteilig bei dem bekannten Verfahren ist, daß die Nutzkanäle bereits beim Entwurf des Datenübertragungsnetzes den zukünftigen Anwendungen zugeordnet werden. Eine Reaktion auf einen sich beim Betrieb des Datenübertragungsnetzes ergebenden momentanen Bedarf ist nur sehr begrenzt möglich.

Aufgabe der Erfindung ist, ein einfaches Verfahren zum Betreiben eines digitalen Datenübertragungsnetzes anzugeben, welches eine Änderung von Übertragungsparametern während des Betriebs gestattet.

Diese Aufgabe wird durch ein Verfahren mit den Merkmalen des Patentanspruchs 1 erfüllt. Die Erfindung geht von der Überlegung aus, daß bei Datenblöcken mit einer vorbestimmten Anzahl von Bitstellen Übertragungsraten in einzelnen Nutzkanälen dadurch verändert werden können, daß eine oder mehrere Bitstellen für die Übertragung in jeweils einem Nutzkanal genutzt werden. Durch eine Veränderung der Anzahl von Bitstellen in einem Nutzkanal kann eine Anpassung an den Bedarf im Datenübertragungsnetz erzielt werden. Die Anpassung muß jedoch im gesamten Netz bekanntgemacht werden.

Deshalb definiert beim Verfahren nach der Erfindung ein Datenwort im Datenblock einen Übertragungsparameter für einen der Nutzkanäle. In einem ersten Teil eines Übertragungsvorgangs von Datenblöcken wird die Anzahl der zu nutzenden Bitstellen in den einzelnen Nutzkanälen nacheinander für jeden Nutzkanal als Übertragungsparameter übermittelt. Die Übermittlung von Nutzdaten im Nutzdatenteil der Datenblöcke erfolgt bei der Erfindung uneingeschränkt weiter, während die Übertragungsparameter übermittelt werden. Die als Übertragungsparameter für den jeweiligen Kanal übermittelte Bitstellenanzahl wird in jeder Nutzereinheit vorerst nur gespeichert und noch nicht bei der Übertragung der Kommunikationsdaten im jeweiligen Nutzkanal verwendet.

Erst nach dem Ende des Übertragungsvorgangs wird im ersten Nutzkanal die durch die erste Sollanzahl definierte Anzahl von Bitstellen und im zweiten Nutzkanal die durch die zweite Sollanzahl definierte Anzahl von Bitstellen zur Datenübertragung verwendet. Durch diese Maßnahme wird gewährleistet, daß keine Daten beim Verändern der Übertragungsparameter verloren gehen. Erst nachdem im gesamten Datenübertragungsnetz die neuen Übertragungsparameter bekannt sind, erfolgt das Nutzen dieser Übertragungsparameter bei der Übertragung.

Die Übertragungsparameter werden dabei von der Steuereinheit vorgegeben, z.B. auf Anforderung von den Nutzereinheiten hin.

Die Vorgabe erfolgt zweckmäßigerweise so, daß Kanäle mit einer gleichen Sollanzahl von Bitstellen nebeneinander in einer Gruppe angeordnet werden.

In einem Ausführungsbeispiel der Erfindung wird ein weiteres Datenwort im Datenblock zum Bezeichnen der Nutzkanäle verwendet. Während des Übertragungsvorgangs ist demzufolge im ersten Datenblock der erste Nutzkanal bezeichnet, da der erste Datenblock die Übertragungsparameter für den ersten Nutzkanal enthält. Im zweiten Datenblock ist der zweite Nutzkanal bezeichnet. Durch diese Maßnahme können die Nutzereinheiten einfach aufgebaut werden, da sie einen Datenblock unmittelbar entnehmen können, für welchen Nutzkanal er einen Übertragungsparameter enthält.

In einem weiteren Ausführungsbeispiel der Erfindung bilden die Steuereinheit und die Nutzereinheit ein Datenübertragungsnetz mit Ringstruktur, in welchem die Datenblöcke in einer Richtung übermittelt werden. Dieses Datenübertragungsnetz hat vorzugsweise die Eigenschaften des in der bereits oben genannten internationalen Patentanmeldung WO 93/21714 erläuterten Datenübertragungsnetzes. Bei diesem Netz ist die Anzahl gleichzeitig übermittelter Bitstellen im ringförmigen Datenübertragungsnetz gleich der vorbestimmten Anzahl von Bitstellen im Datenblock. Dies wird durch einen Speicher erreicht, der die Bitstellen puffert, die bereits in der Steuereinheit angekommen sind, bevor die zum selben Datenblock gehörenden Bitstellen vollständig gesendet wurden. Der Zugriff auf die Bitstellen des Datenblocks wird durch diese Maßnahme stark vereinfacht. Bei einfachem Zugriff ergeben sich aber auch kurze Zugriffszeiten für ein Lesen oder ein Schreiben einer Bitstelle. Sind die Verzögerungen der Nutzereinheiten und der Steuereinheit beim Übermitteln einer Bitstelle kleiner oder etwa gleich der Zeit zwischen dem Senden zweier aufeinanderfolgender Bitstellen, so können auch zeitkritische Anwendungen realisiert werden. Außerdem kann die Anzahl der Nutzereinheiten in einem ringförmigen Datenübertragungsnetz bei vorgegebener Datenblocklänge erhöht werden.

In einem zweiten Teil des Übertragungsvorgangs wird für jeden Kanal eine Benutzerrahmenlänge als Übertragungsparameter übermittelt. Die Benutzerrahmenlänge ist eine von der Steuereinheit vorgegebene Anzahl von Bitstellen, die in dem jeweiligen Nutzkanal in einem oder mehreren Datenblöcke nacheinander übertragen werden. Die Benutzerrahmenlänge wird zur Ansteuerung der Geräte verwendet, welche die Nutzdaten bearbeiten. Mit Hilfe der Benutzerrahmenlänge kann in den Nutzereinheiten die Ansteuerung der angeschlossenen Geräte auf einfache Art durchgeführt werden.

In einem dritten Teil des Übertragungsvorgangs werden in einem Ausführungsbeispiel des Verfahrens nach der Erfindung Modulowerte übermittelt, die einen von Übertragungsvorgang zu Übertragungsvorgang veränderlichen Versatz angeben. Durch diese Maßnahme wird erreicht, daß die Benutzerrahmenlänge frei gewählt werden kann, die Anzahl von Datenblöcken in einem Übertragungsvorgang muß demzufolge nicht ganzzahlig durch die Benutzerrahmenlänge bzw. ein Vielfaches der Benutzerrahmenlänge bei mehr als zwei Bitstellen in einem Nutzkanal teilbar sein. Auch ein Auffüllen mit Füllbits entfällt.

In einem vierten Teil des Übertragungsvorgangs werden in einem weiteren Ausführungsbeispiel zwei Datenblöcke übermittelt, in denen ein Versatz für den ersten bzw. für den weiteren Nutzkanal enthalten ist. Der Versatz wird zum Ansteuern der an die Nutzereinheiten angeschlossenen Geräte verwendet. Die Nutzereinheiten können anhand des Versatzes feststellen, wann ein Datenwort vom angeschlossenen Gerät auftritt.

Die bei der Darstellung der Teile des Übertragungsvorgangs verwendete Numerierung ist keine Beschränkung für eine zeitliche Abfolge der Teile des Übertragungsvorgangs. Ein aufeinanderfolgendes Ausführen der vier Teile des Übertragungsvorgangs ist in der Regel nicht kritisch, da beim Beginn einer Kommunikationsverbindung über einen der Nutzkanäle in der Regel einige Mikrosekunden oder auch Millisekunden Verzögerung hinnehmbar sind. Kommt es auf eine sehr schnelle Änderung der Übertragungsparameter an, so können die vier Teile des Übertragungszyklus auch derart zusammengefaßt werden, daß in einem Datenblock jeweils die Übertragungsparameter sämtlicher Teile zusammengefaßt sind.

Wird der Übertragungsvorgang zyklisch wiederholt, so entfallen Protokolle zum Starten und Beenden eines Übertragungsvorgangs, so daß die Nutzereinheiten und auch die Steuereinheit wiederum einfach aufgebaut werden können.

Wird in einem weiteren Ausführungsbeispiel im Datenblock auch der momentane Teil, z.B. der erste Teil, des Übertragungsvorgangs bezeichnet, so können anhand dieser Bezeichnung in den Nutzereinheiten Maßnahmen für die Weiterbearbeitung getroffen werden. Die Nutzereinheiten müssen demzufolge nicht selbsttätig den momentanen Teil des Übertragungsvorgangs identifizieren können, so daß die Steuerung der Nutzereinheiten vereinfacht wird.

Kennzeichnet eine Sollanzahl von Bitstellen mit dem numerischen Wert Null einen nicht benutzten Nutzkanal, so läßt sich das "Einfügen" von Nutzkanälen realisieren. Für den eingefügten Nutzkanal sind zwar Register in den Nutzereinheiten vorgesehen, Bitstellen in dem Datenblock werden aber erst dann belegt, wenn sie auch tatsächlich benötigt werden.

Die Erfindung betrifft in einem zweiten Aspekt ein digitales Datenübertragungsnetz zum Übertragen von Steuerungs- und/oder Kommunikationsdaten und insbesondere zum Ausführen des Verfahrens oder eines Ausführungsbeispiels des Verfahrens nach dem ersten Aspekt der Erfindung. Demzufolge übertragen sich die oben genannten technischen Wirkungen auch auf das digitale Datenübertragungsnetz.

Ein besonders einfacher Aufbau des Datenübertragungsnetzes ergibt sich, wenn die Nutzereinheiten jeweils für jeden Nutzkanal einen Speicher zum Speichern der Anzahl der zukünftigen Bitstellen des betreffenden Nutzkanals enthält. Mit Hilfe von einfachen Addierschaltungen können Adressen bestimmt werden, an denen der jeweilige Nutzkanal im Datenblock beginnt. Werden am Ende des Übertragungsvorgangs die gespeicherten Werte und die berechneten Adressen in einen weiteren Zwischenspeicher übernommen, so kann mit Hilfe einer einfachen Komparatorschaltung für jeden der Nutzkanäle genau die Bitstellen im Datenblock ermittelt werden, an denen die Nutzinformation des jeweiligen Kanals auch tatsächlich auftritt.

Im folgenden wird die Erfindung anhand von Ausführungsbeispielen erläutert. Dabei zeigen:

Figur 1    eine schematische Darstellung eines Datenübertragungsnetzes,

Figur 2    die Bestandteile eines im Datenübertragungsnetz übermittelten Netzrahmen,

Figur 3    Zeitverläufe zum Erläutern der Begriffe Benutzerrahmen und veränderlicher Versatz,

Figur 4    Zeitverläufe zum Erläutern eines festen Versatzes zwischen Eingabedatenwort und Ausgabedatenwort in einem Nutzkanal,

Figur 5    ein Flußdiagramm für ein Verfahren zum Ändern der Übertragungsparameter, und

Figur 6    eine Blockbilddarstellung der Einheiten zum Ändern der Übertragungsparameter in einer Nutzereinheit.

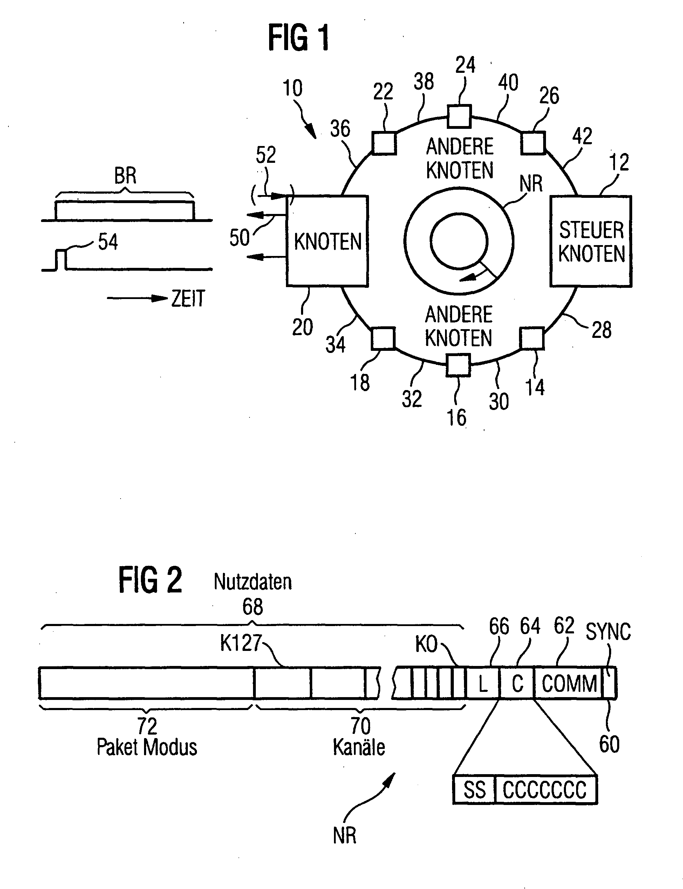

Fig. 1 zeigt eine schematische Darstellung eines Datenübertragungsnetzes 10 zur Übertragung digitaler Kommunikations- und/oder Steuerungsdaten zwischen einer Steuereinheit 12 und Nutzereinheiten 14 bis 26. Die Nutzereinheiten 14 bis 26 sind auf einer Etage eines Gebäudes angeordnet und können untereinander Kommunikations- und/oder Steuerungsdaten austauschen. Über die Steuereinheit 12 können die Nutzereinheiten 14 bis 26 auch mit anderen Datenübertragungsnetzen Daten austauschen, die zum Beispiel in einer anderen Etage des Gebäudes aufgestellt sind. Außer dieser Vermittlungsfunktion hat die Steuereinheit 12 auch eine Steuerfunktion, auf die weiter unten eingegangen wird.

An die Nutzereinheiten 14 bis 26 können verschiedene Geräte angeschlossen werden, welche bestimmte Übermittlungsprotokolle erfordern. Diese Übermittlungsprotokolle können zum Beispiel Protokolle zum Übertragen von digitalen Sprachsignalen beim Telefonieren, Protokolle zum Übermitteln digitaler Radiodaten, Protokolle zum Übermitteln digitaler Bilddaten, einfache analoge oder digitale Steuerungsprotokolle, analoge Sensorprotokolle, Protokolle zum Übermitteln digitaler Daten zwischen verschiedenen Datenverarbeitungsanlagen und viele andere mehr sein.

Die Steuereinheit 12 und die Nutzereinheiten 14 bis 26 sind mit Hilfe von Übertragungsleitungen 28 bis 42 ringförmig verbunden. Auf den Übertragungsleitungen 28 bis 42 kreist ständig ein Netzrahmen NR, dessen Bestandteile anhand der Fig. 2 weiter unten erläutert werden. Nutzdaten der an die Nutzereinheiten 14 bis 26 angeschlossenen Geräte werden mit Hilfe des Nutzrahmens NR zu diesen hin oder von diesen weg übermittelt. Zum Übermitteln werden Nutzkanäle im Netzrahmen verwendet, die letztlich genau definierte Zeitschlitze sind, in denen eine vorgegebene Anzahl Datenbits übertragen wird.

Fig. 1 zeigt einen Benutzerrahmen BR, der ein Datenwort eines an die Nutzereinheit 20 angeschlossenen Geräts verdeutlicht.

Der Benutzerrahmen kann an das Gerät gesendet werden, vgl. Pfeil 50. Gleichzeitig oder alternativ kann der Benutzerrahmen BR aber auch vom Gerät gesendet werden, vgl. Pfeil 52. Die Nutzereinheit 20 erzeugt außerdem einen Synchronisationsimpuls 54, wenn ein neuer Benutzerrahmen BR zum Gerät gesendet werden soll. Wenn das Gerät einen Benutzerrahmen BR an die Nutzereinheit 20 senden möchte, wartet es auf den Synchronisationsimpuls 254.

Fig. 2 zeigt die Bestandteile eines im Datenübertragungsnetz 10 gemäß Fig. 1 übertragenen Netzrahmens NR. Die Netzrahmen NR werden mit einer fest vorgegebenen Rahmenfrequenz fR übermittelt, so daß sich eine fest vorgegebene Rahmendauer RD ergibt. Jeder übermittelte Netzrahmen NR hat eine genau vorgegebene Anzahl von Bitstellen, die gemäß einer vorgegebenen Bitfrequenz fB übermittelt werden, z.B. 155,52 Mbps (Millionen Bits pro Sekunde) bei 1215 Bitstellen pro Netzrahmen NR.

Der Netzrahmen NR enthält einen Synchronisationsteil 60, welcher zum Ermitteln des genauen Anfangs des Netzrahmens NR dient. Zeitlich nach dem Synchronisationsteil 60 folgt ein Kommandoteil 62, in dem gemäß einer Kommandosprache Kommandos zwischen den Nutzereinheiten 14 bis 26 und der Steuereinheit 12 (vgl. Fig. 1) ausgetauscht werden. Der Kommandoteil 62 wird auch verwendet, wenn von einer Nutzereinheit 14 bis 26 (vgl. Fig. 1) ein neuer Nutzkanal angefordert wird.

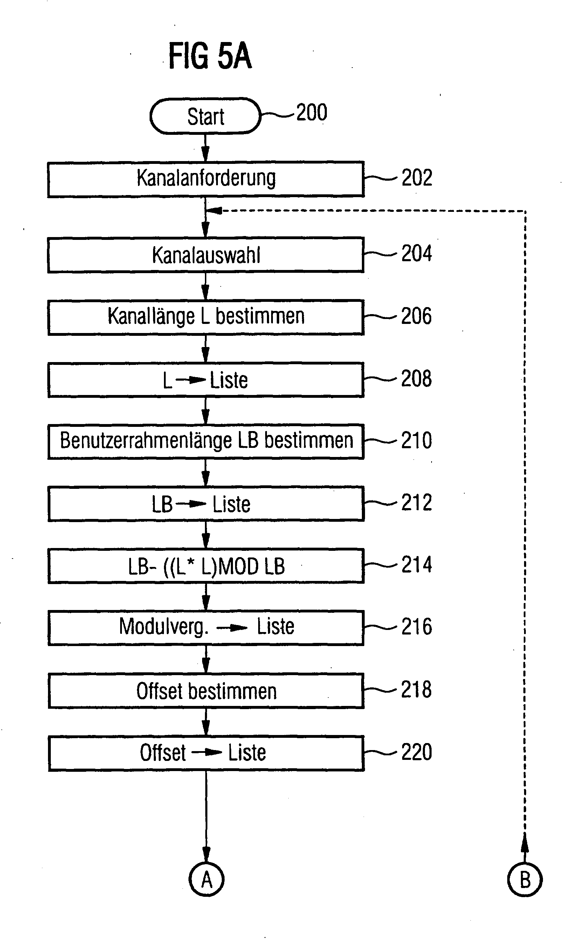

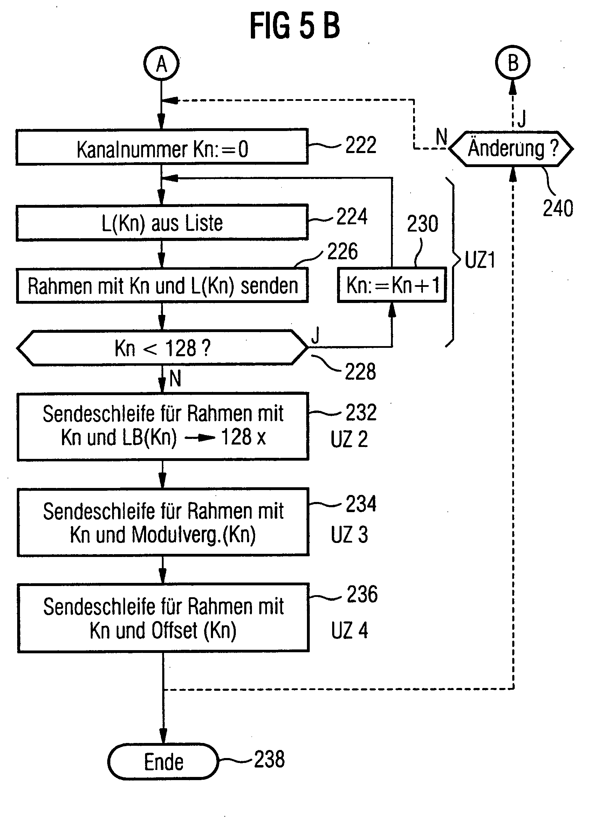

Nach dem Kommandoteil 62 folgt ein Bezeichnungsdatenwort 64, in welchem sieben Bitstellen c zur Identifikation eines von 128 möglichen Kanälen verwendet werden und in dem zwei weitere Bitstellen s zur Bezeichnung eines von vier verschiedenen Unterzyklen UZ1 bis UZ4 verwendet wird. Die Unterzyklen UZ1 bis UZ4 sind Bestandteil eines Hauptzyklus HZ zum Ändern der Übertragungsparameter im Datenübertragungsnetz 10 (vgl. Fig. 1). Der Hauptzyklus HZ und die Unterzyklen UZ1 bis UZ4 werden weiter unten anhand der Fig. 5 näher erläutert.

Räumlich neben dem Bezeichnungsdatenwort 64 bzw. zeitlich nach dem Bezeichnungsdatenwort 64 wird ein Parameterdatenwort 66 übermittelt, in welchem genau ein Übertragungsparameter für den im Bezeichnungsdatenwort 64 bezeichneten Nutzkanal hinterlegt ist. Der konkrete Übertragungsparameter im Parameterdatenwort 66 wird durch den Wert der Bitstellen s im Bezeichnungsdatenwort 64 festgelegt. Der Netzrahmen enthält außerdem einen Nutzdatenteil 68 konstanter Länge. In einem ersten Teil 70 des Nutzdatenteils 68 befinden sich Nutzdaten, die über einen der Nutzkanäle K0 bis K127 übermittelt werden. Je nach Anzahl gerade benutzter Nutzkanäle K0 bis K127 und deren Anzahl von verwendeten Bitstellen ist der Teil 70 unterschiedlich lang.

Ein verbleibender Teil 72 des Nutzdatenteils 68 wird im Gegensatz zur verbindungsorientierten Übermittlung im Teil 70 für eine verbindungslose Übermittlung von Nutzdaten in einem der bekannten Paketübermittlungsverfahren verwendet, z.B. ATM (Asynchron Transfer Mode).

Nicht benutzte Kanäle haben eine Länge von null Bits, so daß im Extremfall, wenn keiner der Kanäle benutzt wird, der gesamte Nutzdatenteil 68 für die Übertragung im Paketmodus genutzt werden kann. Mit zunehmender Größe des Teils 70 für die Nutzkanäle K0 bis K127 verringert sich der Anteil des Teils 72.

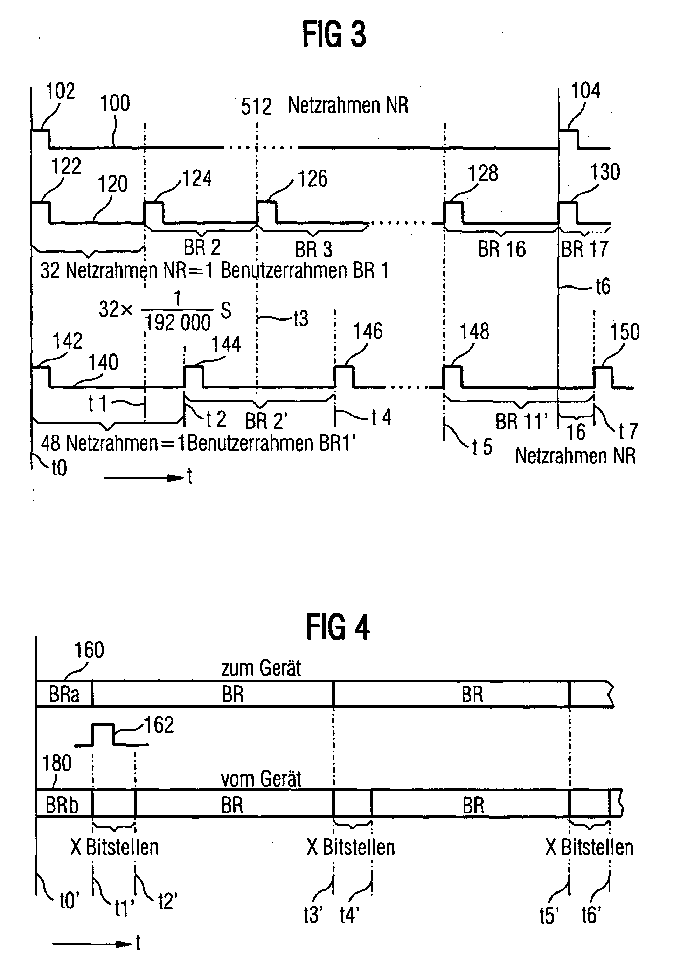

Fig. 3 zeigt drei Zeitverläufe 100, 120 und 140, die zu einem gemeinsamen Zeitpunkt t0 beginnen. Der Hauptzyklus HZ, der aus den vier Unterzyklen UZ für jeweils 128 Kanälen besteht, benötigt insgesamt 512 Netzrahmen NR. Die Zeit zwischen einem Impuls 102 des Zeitverlaufs 100 und einem Impuls 104 des Zeitverlaufs 100 zu einem Zeitpunkt t6 entspricht genau der Zeit für die Übermittlung von 512 Netzrahmen NR. Hat ein betrachteter Nutzkanal die Länge von einer Bitstelle, und ist ein Benutzerrahmen BR zweiunddreißig Bitstellen lang, so wird ein einzelner Benutzerrahmen BR durch zweiunddreißig Netzrahmen NR übermittelt. Ein Impuls 122 des Zeitverlaufs 120 zum Zeitpunkt t0 kennzeichnet den Beginn eines ersten Benutzerrahmens BR1. Zu einem nach dem Zeitpunkt t0 liegendem Zeitpunkt t1 bzw. zu einem nach dem Zeitpunkt t2 liegenden Zeitpunkt t3 beginnt ein zweiter Benutzerrahmen BR2 bzw. ein dritter Benutzerrahmen BR3, angedeutet durch einen Impuls 124 bzw. 126 des Zeitverlaufs 120. Nach der Übermittlung eines sechzehnten Benutzerrahmens BR16, beginnend zu einem nach dem Zeitpunkt t3 liegendem Zeitpunkt t5 (vgl. Impuls 128 des Zeitverlaufs 120), sind bereits 512 Netzrahmen NR übermittelt worden. Somit beginnt ein neuer Benutzerrahmen BR17 zum Zeitpunkt t6, vgl. Impuls 130 des Zeitverlaufs 120. Ein Versatz zwischen dem Beginn des nächsten Benutzerrahmen BR17 und dem Beginn des Hauptzyklus HZ tritt nicht auf.

Beim Zeitverlauf 140 hat der betrachtete Nutzkanal wiederum die Länge von einer Bitstelle. Ein Benutzerrahmen BR1'hat dagegen achtundvierzig Bitstellen, so daß achtundvierzig Netzrahmen zur Übermittlung des Benutzerrahmens BR1' verwendet werden. Der erste Benutzerrahmen BR1' wird vom Zeitpunkt t0 beginnend bis zu einem Zeitpunkt t2 übermittelt, welcher zwischen dem Zeitpunkt t1 und dem Zeitpunkt t3 liegt. Die Übermittlung des ersten Bits des zweiten Benutzerrahmens BR2' wird durch einen Impuls 144 des Zeitverlauf 140 zum Zeitpunkt t2 dargestellt. Ein Impuls 146 zu einem Zeitpunkt t4, welcher zwischen den Zeitpunkten t3 und t5 liegt, kennzeichnet den Beginn des dritten Benutzerrahmens BR3'. Bereits während der Übermittlung eines elften Benutzerrahmens BR11', beginnend zum Zeitpunkt t5 (vgl. Impuls 148 des Zeitverlaufs 140) ist der erste Hauptzyklus HZ beendet. Bis zur vollständigen Übermittlung des Benutzerrahmens BR11' müssen noch weitere sechzehn Netzrahmen NR übermittelt werden, so daß erst zu einem nach dem Zeitpunkt t6 liegenden Zeitpunkt t7 mit der Übermittlung eines weiteren Benutzerrahmens BR' begonnen werden kann. Beim Zeitverlauf 140 tritt demzufolge ein Versatz von sechzehn Netzrahmen NR innerhalb eines Hauptzyklus HZ auf. Der Versatz läßt sich mit Hilfe der Modulo-Operation berechnen, indem die Anzahl der Netzrahmen NR pro Hauptzyklus HZ durch das Produkt aus der Anzahl der Bitstellen in einem Benutzerrahmen BR' und der im betreffenden Nutzkanal verwendeten Anzahl von Bitstellen berechnen. Der Versatz muß zumindest in der Nutzereinheit 14 bis 26 bekannt sein, in der auf den betreffenden Kanal zugegriffen wird, damit die Datenübertragung fehlerfrei durchgeführt werden kann.

Fig. 4 zeigt zwei Zeitverläufe 160 und 180 zum Darstellen der zeitlichen Abfolge von Benutzerrahmen BR im Falle des Zeitverlaufs 160 zum Gerät und im Fall des Zeitverlaufs 180 vom Gerät, welches an die Nutzereinheit 20 (vgl. Fig. 1) angeschlossen ist. Zu einem Zeitpunkt t1' wird dem Gerät durch die Nutzereinheit 20 mit Hilfe eines Synchronimpulses 162 signalisiert, daß ein Benutzerrahmen BRa bereitgestellt wurde. Das Übertragungsprotokoll des Geräts ist so festgelegt, daß mit einem Versatz von X Bitstellen vom Gerät ein Benutzerrahmen BR6 bereitgestellt wird. Somit kann die Nutzereinheit 20 zu einem Zeitpunkt t2' den Benutzerrahmen BRb empfangen und für die weitere Übertragung bearbeiten. Der Versatz von X Bitstellen bleibt auch zwischen späteren Zeitpunkten t3' und t4', bzw. zwischen Zeitpunkten t5' und t6' erhalten. Ein derartiger Versatz tritt zum Beispiel bei einer Übermittlung an der aus dem ISDN-Protokoll (Integrated Services Digital Network) bekannten Telekommunikationsschnittstelle S0 auf.

Fig. 5 zeigt ein Flußdiagramm für ein Verfahren zum Verändern der Übertragungsparameter im Datenübertragungsnetz 10 gemäß Fig. 1. Das Verfahren beginnt in einem Schritt 200 mit der erstmaligen Inbetriebnahme des Datenübertragungsnetzes 10.

In einem Schritt 202 wird eine Kanalanforderung durch das an der Nutzereinheit 20 angeschlossene Gerät erzeugt. Diese Kanalanforderung wird mit Hilfe des Kommandoteils 62 (vgl. Fig. 2) zur Steuereinheit 12 übermittelt.

In einem unmittelbar auf den Schritt 202 folgenden Schritt 204 weist die Steuereinheit 12 dem Gerät einen Nutzkanal zu. Anhand einer ebenfalls im Kommandoteil 62 übermittelten gerätespezifischen Identifikationsnummer ermittelt die Steuereinheit 12 die geeignete Kanallänge L für den zugewiesenen Kanal (Schritt 206). In einem unmittelbar folgenden Schritt 208 wird die ermittelte Kanallänge L in eine Liste, z.B. ein Satz von Speicherregistern eingetragen.

Anschließend bestimmt die Steuereinheit 12 in einem Schritt 210 die für das Gerät vorgesehene Benutzerrahmenlänge LB, welche ebenfalls in einer Liste gespeichert wird (Schritt 212).

In einem folgenden Schritt 214 ermittelt die Benutzereinheit 12 den Modulo-Versatz, der bereits anhand der Fig. 3 oben erläutert wurde. Auch dieser Modulo-Versatz wird in der Liste gespeichert (Schritt 216). Die vorzeitige Berechnung des Modulo-Versatzes und damit auch deren Speicherung kann entfallen, wenn der Modulo-Versatz z.B. durch eine digitale Schaltung in sehr kurzer Zeit für den jeweiligen Kanal aus der Kanallänge, der Benutzerrahmenlänge und der Anzahl von Netzrahmen NR pro Zyklus berechnet wird, bevor er dann übermittelt wird.

Der Modulo-Versatz berechnet sich nach folgender Formel:

$$\text{Versatz} = \text{LB} - (\text{CL} * \text{L}) \text{ MOD LB},$$

wobei CL die Anzahl von Netzrahmen NR in einem unten erläuterten Hauptzyklus HZ ist.

Weiterhin bestimmt die Steuereinheit 12 in einem Schritt 218 den bereits anhand der Figur 4 oben erläuterten Versatz zwischen Benutzerrahmen bei der Eingabe und bei der Ausgabe in bzw. aus dem Gerät. Auch dieser Versatz wird in einer Liste gespeichert (Schritt 220).

In einem dem Schritt 220 unmittelbar folgenden Schritt 222 wird ein Zähler für die Kanalnummer Kn auf den Wert Null gesetzt. Anschließend wird ein Schritt 224 ausgeführt.

Im Schritt 224 entnimmt die Steuereinheit 12 aus der Liste für die Kanallänge L die Kanallänge L des Nutzkanals Kn, dessen Kanalnummer Kn im Kanalzähler momentan enthalten ist.

In einem folgenden Schritt 226 wird ein Netzrahmen NR gesendet, bei dem im Bezeichnungsteil 64 der Kanal mit der momentanen Kanalnummer Kn bezeichnet ist und bei dem im Parameterdatenwort 66 (vgl. Fig. 2) die Kanallänge L des bezeichneten Kanal Kn angegeben ist. Außerdem bezeichnen die zwei Bitstellen s im Bezeichnungsdatenwort 64 (vgl. Fig. 2) den ersten Unterzyklus UZ1. Unmittelbar nach dem Schritt 226 wird ein Schritt 228 ausgeführt.

Im Schritt 228 wird geprüft, ob der Kanalzähler einen Wert hat, der kleiner als 128 ist, d.h. die Gesamtanzahl nutzbarer Nutzkanäle. Ist dies der Fall, so folgt unmittelbar nach dem Schritt 228 ein Schritt 230, in welchen der Kanalzähler um den Wert "1" erhöht wird. Anschließend wird das Verfahren im Schritt 224 fortgesetzt.

Somit befindet sich das Verfahren im Unterzyklus UZ1, der die Schritte 224 bis 230 enthält und erst beendet wird, wenn im Schritt 228 festgestellt wird, daß bereits die Kanallänge L für sämtliche Nutzkanäle übermittelt wurde. In diesem Fall folgt unmittelbar nach dem Schritt 228 der nächste Unterzyklus UZ2.

Der Unterzyklus UZ2 ist in der Fig. 5 vereinfacht durch einen Block 232 dargestellt, welcher eine Struktur hat, die der Struktur der Schritte 224 bis 230 entspricht. Im Unterzyklus UZ2 wird die im Bezeichnungsdatenwort 64 in den Bitstellen c (vgl. Fig. 2) enthaltene Kanalnummer Kn von Netzrahmen NR zu Netzrahmen NR um den Wert "1" erhöht. In den Bitstellen s des Bezeichnungsdatenworts 64 ist der Unterzyklus UZ2 bezeichnet. Im Parameterdatenwort 66 (vgl. Fig. 2) werden jeweils die zu dem im Bezeichnungsdatenwort 64 bezeichneten Kanal Kn gehörenden Benutzerrahmenlängen LB angegeben. Nach 128 gesendeten Netzrahmen NR ist der Unterzyklus UZ2 beendet und das Verfahren wird mit dem Unterzyklus UZ3 fortgesetzt, der in einem Block 234 dargestellt ist.

Im Unterzyklus UZ3 werden wiederum 128 Netzrahmen NR gesendet, in denen jeweils einer der Nutzkanäle Kn sowie das aus der entsprechenden Liste entnommene Modulo-Ergebnis für diesen Nutzkanal Kn übermittelt. In den Bitstellen s des Bezeichnungsdatenworts 64 (vgl. Fig. 2) ist dabei der Unterzyklus UZ3 gekennzeichnet. Nach 128 übermittelten Netzrahmen NR ist der Unterzyklus UZ3 beendet und das Verfahren wird mit dem Unterzyklus UZ4 fortgesetzt, vgl. Block 236.

Im Unterzyklus UZ4 werden 128 Netzrahmen NR übermittelt, in denen jeweils im Bezeichnungsdatenwort 64 einer der Nutzkanäle Kn bezeichnet ist. Im Parameterdatenwort 66 befindet sich der zum bezeichneten Nutzkanal Kn gehörende Versatz, der im Schritt 218 bestimmt wurde. Nach 128 übertragenen Netzrahmen NR im Unterzyklus UZ4 wird dieser beendet und das Verfahren in einem Schritt 238 fortgesetzt.

Im Schritt 238 wird das Verfahren beendet, indem die übermittelten Übertragungsparameter für die Übermittlung verwendet werden. Dazu wird ein Umspringen der als Zähler fungierenden Bitstellen c im Bezeichnungsdatenwort 64 (vgl. Fig. 2) auf den Wert "0" verwendet. Die Nutzereinheiten 14 bis 26 (vgl. Fig. 1) erkennen am Umspringen dieses Zählerwertes, daß die übermittelten Übertragungsparameter nunmehr für die Übertragung zu verwenden sind.

In einem anderen Ausführungsbeispiel der Erfindung wird der aus den Unterzyklen UZ1 bis UZ4 bestehende Hauptzyklus HZ zyklisch wiederholt. In diesem Fall folgt nach dem Schritt 236 anstelle des Schritts 238 ein Schritt 240. In diesem Schritt wird geprüft, ob Änderungen in den Übertragungsparametern erforderlich sind, wenn zum Beispiel ein weiteres Gerät einen Nutzkanal benötigt oder ein Gerät seinen Nutzkanal wieder freigibt. Sind Änderungen nicht erforderlich, so folgt nach dem Schritt 240 unmittelbar der Schritt 222. Sind dagegen Änderungen erforderlich, so folgt nach dem Schritt 240 der Schritt 204.

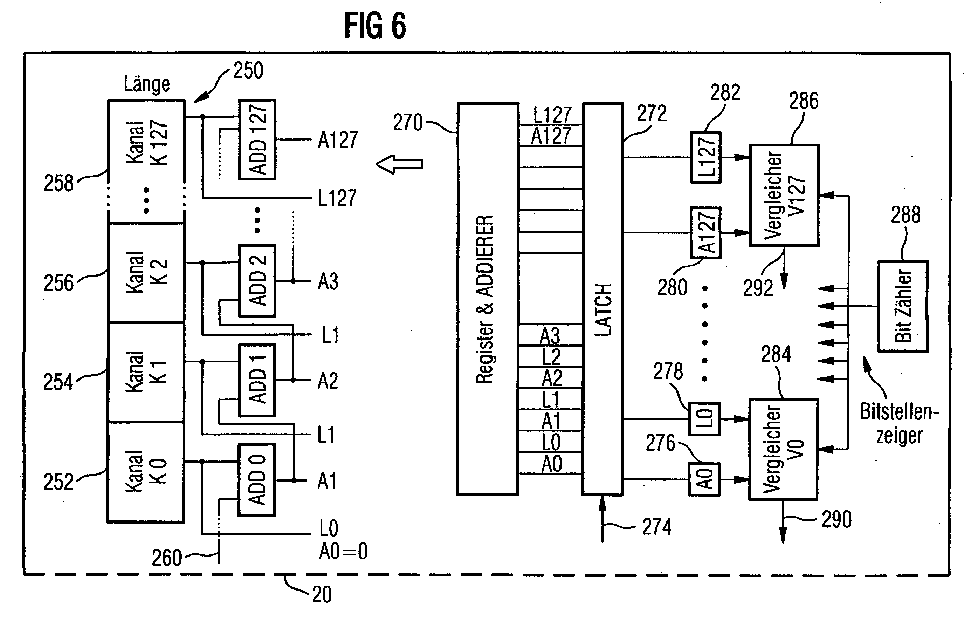

Fig. 6 zeigt eine schematische Darstellung der beim Ändern der Übertragungsparameter in der Nutzereinheit 20 verwendeten Baugruppen. In einem Registersatz 250 sind 128 Registerplätze enthalten, von denen in der Fig. 6 vier Registerplätze 252 bis 258 dargestellt sind. Der Registerplatz 252, 254 bzw. 256 wird zum Speichern der im ersten Unterzyklus UZ1 von der Steuereinheit 12 übermittelten Kanallänge L0, L1 bzw. L2 des Nutzkanals K0, K1 bzw. K2 verwendet. Im Registerplatz 258 wird die Länge L127 des Nutzkanals K127 gespeichert. Am Ausgang des Registerplatzes 252 ist ein Addierer ADD0 angeordnet, welcher die Startadresse A1 des Nutzkanals K1 im Netzrahmen NR berechnet. Mit Hilfe eines weiteren Eingangs 260 des Addierers ADD0 kann die Startadresse A0 des Nutzkanals K0 frei vorgegeben werden. Die Adresse A1 am Ausgang des Addierers ADD0 dient als Grundlage für die Berechnung der Startadresse des folgenden Nutzkanals K2 im Netzrahmen NR. Dazu wird zum Adreßwert A1 in einem Addierer ADD1 die im Registerplatz 254 gespeicherte Kanallänge L1 des Nutzkanals K1 zur Adresse A1 addiert. Am Ausgang des Addierers ADD1 wird die Startadresse des Nutzkanals K2 ausgegeben. Auf analoge Weise berechnen weitere Addierer ADD2 bis ADD127 die Startadresse der Nutzkanäle K3 bis K127.

Vom Ausgang jedes Registerplatzes 252 bis 258 wird jeweils über eine Leitung die im jeweiligen Registerplatz 252 bis 258 gespeicherte Kanallänge L0 bis L127 abgegriffen, so daß sie für die weitere Bearbeitung zur Verfügung steht. Das Register 250 und die Addierer ADD0 bis ADD127 sind im rechten Teil der Fig. 6 in einem Registersatz-Addierer-Block 270 zusammengefaßt, welcher die Ausgänge A0 bis A127 und L0 bis L127 hat, die eingangsseitig mit einem elektrischen Schalterblock 272 verbunden sind. Der Schalterblock 272 schaltet die Ausgangsleitungen A0 bis A127 und L0 bis L127 des Register-Addier-Blocks 270 bei Anliegen eines Steuersignals an einer Leitung 274 auf Registerplätze 276 bis 282 zum Speichern der Adressen A0 bis A127 bzw. der Längen L0 bis L127 durch. Dieses Durchschalten wird zum Ende des Hauptzyklus HZ durchgeführt. Mit dem Ausgang der zu einem der Nutzkanäle K0 bis K127 gehörenden Registerplätze 276 bis 282 ist jeweils ein Vergleicher verbunden, von denen in der Fig. 6 die Vergleicher 284 und 286 dargestellt sind.

Der Vergleicher 284 ist mit dem Registerplatz 276 für die Adresse A0 des Nutzkanals K0 und mit dem Registerplatz 278 für die Länge L0 des Nutzkanals K0 verbunden. Der Vergleicher 286 ist analog dazu mit dem Registerplatz 280 für die Adresse A127 des Nutzkanals K127 und mit dem Registerplatz 282 für die Länge L127 des Nutzkanals K127 verbunden. Der Vergleicher 284 vergleicht die Adresse A0 mit einer durch einen Bitzähler 288 zum Zählen der bereits übermittelten Bitstellen im Netzrahmen NR erzeugten Bitadresse. Sobald der Bitzähler 288 eine Adresse erreicht, die mit der Adresse A0 übereinstimmt, wird am Ausgang des Vergleichers auf einer Leitung 290 ein Steuersignal für einen Multiplexer erzeugt, das solange wirksam ist, bis der Bitzähler 288 eine Adresse erreicht, welche einer Adresse A0+L0 entspricht. Das Signal auf der Leitung 290 gewährleistet, daß in den Netzrahmen NR die Nutzdaten des auf dem Kanal K0 übertragenden Geräts auch wirklich an die dafür vorgesehenen Bitstellen im Netzrahmen NR gelangen.

Der Vergleicher 228 vergleicht die Adresse des Bitzählers 288 mit der Adresse A127 und erzeugt auf einer Leitung 292 ein Steuersignal, falls der Bitzähler 288 die Adresse A127 erreicht. Das Steuersignal auf der Leitung 292 bleibt solange wirksam, bis der Bitzähler 288 eine Adresse erreicht, welche der Summe aus der Adresse 127 und der Länge L127 entspricht. Das Signal auf der Leitung 292 gewährleistet, daß ein Demultiplexer genau zum Gerät durchgeschaltet wird, welches Daten im Nutzkanal K127 empfängt.

**Patentansprüche**

1. Verfahren zum Betreiben eines digitalen Datenübertragungsnetzes (10), durch welches Steuerungs- und/oder Kommunikationsdaten übertragen werden,
   bei dem zwischen einer Steuereinheit (12) und mindestens einer Nutzereinheit (14 bis 26) Datenblöcke (NR) mit einer vorbestimmten Anzahl von Bitstellen übermittelt werden,
   wobei ein Datenwort (66) im Datenblock (NR) einen Übertragungsparameter (L, LB) für einen von mindestens zwei Nutzkanälen (K0 bis K127) definiert,
   und wobei der Datenblock (NR) außerdem einen Nutzdatenteil (68) enthält, dessen Bitstellen bei der Datenübertragung in den Nutzkanälen verwendet werden,
   in einem ersten Teil (UZ1) eines Übertragungsvorgangs (HZ) von Datenblöcken (NR) ein erster Datenblock und ein weiterer Datenblock übermittelt werden,
   wobei der erste Datenblock als Übertragungsparameter eine durch die Steuereinheit vorgegebene Sollanzahl (L0) von Bitstellen enthält, die angibt, wieviele Bitstellen zukünftig für die Datenübertragung im ersten Nutzkanal (K0) vorgesehen sind,
   und wobei der weitere Datenblock als Übertragungsparameter eine ebenfalls durch die Steuereinheit vorgegebene Sollanzahl (L1) von Bitstellen enthält, die angibt, wieviele Bitstellen zukünftig für die Datenübertragung im weiteren Nutzkanal (K1) vorgesehen sind,
   in der Nutzereinheit (20) die zum ersten Nutzkanal (K0) gehörende Sollanzahl (L0) sowie die zum zweiten Nutzkanal (K1) gehörende Sollanzahl (L1) gespeichert werden,
   und bei dem nach dem Ende des Übertragungsvorgangs (HZ) im ersten Nutzkanal (K0) die durch die erste Sollanzahl (L0) definierte Anzahl von Bitstellen und im zweiten Nutzkanal (K1) die durch die zweite Sollanzahl (L1) definierte Anzahl von Bitstellen zur Datenübertragung verwendet werden.

2. Verfahren nach Anspruch 1, **dadurch gekennzeichnet, daß** ein weiteres Datenwort (64) im Datenblock (NR) zum Bezeichnen der Nutzkanäle (K0 bis K127) verwendet wird,
   und daß im ersten Datenblock der erste Nutzkanal (K0) und im zweiten Datenblock der weitere Nutzkanal (K1) bezeichnet ist.

3. Verfahren nach einem der vorhergehenden Ansprüche, **dadurch gekennzeichnet, daß** die Steuereinheit (12) und die Nutzereinheit (20) ein Datenübertragungsnetz (10) mit Ringstruktur bilden, in welchem die Datenblöcke (NR) in einer Richtung übermittelt werden.

4. Verfahren nach Anspruch 3, **dadurch gekennzeichnet, daß** die Anzahl gleichzeitig übermittelter Bitstellen im ringförmigen Datenübertragungsnetz (10) gleich der vorbestimmten Anzahl von Bitstellen im Datenblock (NR) ist.

5. Verfahren nach Anspruch 3 oder 4, **dadurch gekennzeichnet, daß** die Verzögerung durch die Nutzereinheit kleiner oder etwa gleich der Zeit zwischen dem Senden zweier aufeinander folgender Bitstellen des Datenblocks (NR) ist.

6. Verfahren nach einem der vorhergehenden Ansprüche, **dadurch gekennzeichnet, daß** in einem zweiten Teil (UZ2) des Übertragungsvorgangs (HZ) zwei Datenblöcke übermittelt werden,
wobei der eine Datenblock als Übertragungsparameter eine Benutzerrahmenlänge (LB0) enthält, die angibt, wieviele Bitstellen zukünftig im ersten Nutzkanal (K0) zu einem Benutzerrahmen (BR) gehören,
und wobei der andere Datenblock als Übertragungsparameter eine Benutzerrahmenlänge (LB1) enthält, die angibt, wieviele Bitstellen zukünftig im weiteren Nutzkanal (K1) zu einem Benutzerrahmen (BR) gehören.

7. Verfahren nach einem der vorhergehenden Ansprüche, **dadurch gekennzeichnet, daß** in einem dritten Teil (UZ3) des Übertragungsvorgangs (HZ) zwei Datenblöcke übermittelt werden,
wobei der eine Datenblock als Übertragungsparameter einen Modulowert enthält, der den ganzzahligen Rest einer Division der Gesamtanzahl der Datenblöcke im Übertragungsvorgang (HZ) durch das Produkt aus zukünftiger Benutzerrahmenlänge (BR) des ersten Nutzkanals (K0) und der zukünftigen Bitstellenanzahl (L0) im ersten Nutzkanal (K0) angibt,
und wobei der andere Datenblock einen Modulowert enthält, der den ganzzahligen Rest einer Division der Gesamtanzahl der Datenblöcke im Übertragungsvorgang durch das Produkt aus zukünftiger Benutzerrahmenlänge (BR) des weiteren Nutzkanals (K1) und der zukünftigen Bitstellenanzahl (L1) im weiteren Nutzkanal (K1) angibt.

8. Verfahren nach einem der vorhergehenden Ansprüche, **dadurch gekennzeichnet, daß** in einem vierten Teil (UZ4) des Übertragungsvorgangs (HZ) zwei Datenblöcke übermittelt werden,
wobei der eine Datenblock als Übertragungsparameter eine Bitstellenanzahl enthält, die einen Versatz zwischen einem Eingabedatenwort (BRa) und einem Ausgabedatenwort (BRb) im ersten Nutzkanal (K0) angibt,
und wobei der andere Datenblock eine Bitstellenanzahl enthält, die einen Versatz zwischen einem Eingabedatenwort und einem Ausgabedatenwort im weiteren Nutzkanal (K1) enthält.

9. Verfahren nach einem der vorhergehenden Ansprüche, **dadurch gekennzeichnet, daß** der Übertragungsvorgang (HZ) zyklisch wiederholt wird.

10. Verfahren nach einem der vorhergehenden Ansprüche, **dadurch gekennzeichnet, daß** der Datenblock (NR) ein Datenwort (c) enthält, in welchem der momentane Teil (UZ1 bis UZ4) des Übertragungsvorgangs (HZ) bezeichnet ist.

11. Verfahren nach einem der vorhergehenden Ansprüche, **dadurch gekennzeichnet, daß** eine Sollanzahl (L) von Bitstellen gleich Null einen nicht benutzten Nutzkanal (K0 bis K127) definiert.

12. Digitales Datenübertragungsnetz (10) zum Übertragen von Steuerungs- und/oder Kommunikationsdaten, insbesondere zum Ausführen des Verfahrens nach einem der vorhergehenden Ansprüche,
wobei die Kommunikationsdaten über mindestens zwei Nutzkanäle (K0 bis K127) übermittelt werden,
mit einer Steuereinheit (12) und mindestens einer Nutzereinheit (20),
wobei zwischen der Steuereinheit (12) und der Nutzereinheit (20) Datenblöcke (NR) mit einer vorbestimmten Anzahl von Bitstellen übermittelt werden,
und wobei die Steuereinheit (12) für die Nutzkanäle (K0 bis K127) Übertragungsparameter (L, LB) vorgibt, welche in den Nutzkanälen (K0 bis K127) zugeordneten Speicherzellen (276 bis 282) in der Nutzereinheit (20) gespeichert werden.

13. Datenübertragungsnetz nach Anspruch 12, **dadurch gekennzeichnet, daß** die Nutzereinheit für jeden Nutzkanal einen Speicher zum Speichern der Anzahl der zukünftigen Bitstellen des Nutzkanals enthält.

14. Datenübertragungsnetz nach Anspruch 13, **dadurch gekennzeichnet, daß** die Speicher ausgangsseitig jeweils mit dem ersten Eingang einer Addiereinheit verbunden sind,
und daß ein anderer Eingang der Addiereinheiten, ausgenommen der einer ersten Addiereinheit mit dem Ausgang der Addiereinheit des benachbarten Kanals verbunden ist.

15. Datenübertragungsnetz nach Anspruch 13 oder 14, **dadurch gekennzeichnet, daß** die Nutzereinheit einen weiteren Zwischenspeicher enthält, der eingangsseitig mit den Ausgängen der Speicherzellen verbunden ist und/oder der eingangsseitig mit den Ausgängen der Addiereinheiten verbunden ist.

**Claims**

1.  Method for operating a digital transmission network (10), by means of which control and/or communication data is transmitted,

    wherein data blocks (NR) with a predetermined number of bit positions are transferred between a control unit (12) and at least one user unit (14 to 26),

    with a data word (66) in the data block (NR) defining a transmission parameter (L, LB) for one of at least two payload channels (K0 to K127),

    and with the data block (NR) also containing a payload element (68), the bit positions of which are used during the data transmission in the payload channels,

    in a first part (UZ1) of a transmission process (HZ) for data blocks (NR) a first data block and a further data block are transferred,

    with the first data block containing a target number (L0) of bit positions predefined by the control unit as a transmission parameter, said target number (L0) specifying how many bit positions will be provided in future for the data transmission in the first payload channel (K0),

    and with the further data block containing a target number of bit positions (L1) similarly predefined by the control unit as a transmission parameter, said target number (L1) specifying how many bit positions will be provided in future for the data transmission in the further payload channel (K1),

    the target number (L0) associated with the first payload channel (K0) and the target number (L1) associated with the second payload channel (K1) are stored in the user unit (20),

    and wherein after the end of the transmission process (HZ) the number of bit positions defined by the first target number (L0) are used for data transmission in the first payload channel (K0) and the number of bit positions defined by the second target number (L1) are used for data transmission in the second payload channel (K1).

2.  Method according to claim 1, **characterised in that** a further data word (64) is used in the data block (NR) to designate the payload channels (K0 to K127),

    and the first payload channel (K1) is designated in the first data block and the further payload channel (K1) is designated in the second data block.

3.  Method according to one of the preceding claims, **characterised in that** the control unit (12) and the user unit (20) form a data transmission network (10) with a ring structure, in which the data blocks (NR) are transferred in one direction.

4.  Method according to claim 3, **characterised in that** the number of simultaneously transferred bit positions in the ring-shaped data transmission network (10) is identical to the predetermined number of bit positions in the data block (NR).

5.  Method according to claim 3 or 4, **characterised in that** the delay through the user unit is shorter than or roughly equal to the time between the transmission of two successive bit positions of the data block (NR).

6.  Method according to one of the preceding claims, **characterised in that** in a second part (UZ2) of the transmission process (HZ) two data blocks are transferred,

    with the one data block containing a user frame length (LB0) as a transmission parameter, said user frame length (LB0) specifying how many bit positions will in future be associated with a user frame (BR) in the first payload channel (K0),

    and with the other data block containing a user frame length (LB1) as a transmission parameter, said user frame length (LB1) specifying how many bit positions will in future be associated with a user frame (BR) in the further payload channel (K1).

7.  Method according to one of the preceding claims, **characterised in that** in a third part (UZ3) of the transmission process (HZ) two data blocks are transferred,

    the one data block containing a modulo value as a transmission parameter, said modulo value specifying the whole-number remainder of a division of the total number of data blocks in the transmission process (HZ) by the product of the future user frame length (BR) of the first payload channel (K0) and the future number of bit positions (L0) in the first payload channel (K0),

    and with the other data block containing a modulo value, which specifies the whole-number remainder of a division of the total number of data blocks in the transmission process by the product of the future user frame length (BR) of the further payload channel (K1) and the future number of bit positions (L1) in the further payload channel (K1).

8. Method according to one of the preceding claims, **characterised in that** in a fourth part (UZ4) of the transmission process (HZ) two data blocks are transferred,
with the one data block containing a number of bit positions as a transmission parameter, said number of bit positions specifying an offset between an input data word (BRa) and an output data word (BRb) in the first payload channel (K0), and with the other data block containing a number of bit positions, which specifies an offset between an input data word and an output data word in the further payload channel (K1).

9. Method according to one of the preceding claims, **characterised in that** the transmission process (HZ) is repeated cyclically.

10. Method according to one of the preceding claims, **characterised in that** the data block (NR) contains a data word (c), in which the current part (UZ1 to UZ4) of the transmission process (HZ) is designated.

11. Method according to one of the preceding claims, **characterised in that** a target number (L) of bit positions equal to zero defines an unused payload channel (K0 to K127).

12. Digital data transmission network (10) for transmitting control and/or communication data, in particular to execute the method according to one of the preceding claims,
with the communication data being transferred by way of at least two payload channels (K0 to K127),
with a control unit (12) and at least one user unit (20),
with data blocks (NR) with a predetermined number of bit positions being transferred between the control unit (12) and the user unit (20),
and with the control unit (12) predefining transmission parameters (L, LB) for the payload channels (K0 to K127), said transmission parameters (L, LB) being stored in storage cells (276 to 282) assigned to the payload channels (K0 to K127) in the user unit (20).

13. Data transmission unit according to claim 12, **characterised in that** the user unit contains a storage unit for every payload channel to store the number of future bit positions of the payload channel.

14. Data transmission network according to claim 13, **characterised in that** the storage unit is connected on the output side to the first input of the adding unit in each instance,
and another input of the adding units, with the exception of the one first adding unit, is connected to the output of the adding unit of the adjacent channel.

15. Data transmission network according to claim 13 or 14, **characterised in that** the user unit contains a further buffer, which is connected in the input side to the outputs of the storage cells and/or which is connected on the input side to the outputs of the adding units.

**Revendications**

1. Procédé pour exploiter un réseau numérique de transmission de données (10) permettant de transmettre des données de commande et/ou de communication,
dans lequel des blocs de données (NR) avec un nombre prédéterminé de positions binaires sont transmis entre une unité de commande (12) et au moins une unité utilisateur (14 à 26),
un mot de données (66) dans le bloc de données (NR) définissant un paramètre de transmission (L, LB) pour l'un d'au moins deux canaux utiles (K0 à K127) et
le bloc de données (NR) contenant en outre une partie de données utiles (68) dont les positions binaires sont utilisées lors de la transmission de données dans les canaux utiles,
dans lequel un premier bloc de données et un autre bloc de données sont transmis dans une première partie (UZ1) d'une opération de transmission (HZ) de blocs de données (NR),
le premier bloc de données contenant, en tant que paramètre de transmission, un nombre prescrit (L0) de positions binaires, spécifié par l'unité de commande, lequel nombre indique combien de positions binaires sont dorénavant prévues pour la transmission de données dans le premier canal utile (K0) et
l'autre bloc de données contenant, en tant que paramètre de transmission, un nombre prescrit (L1) de positions binaires, également spécifié par l'unité de commande, lequel nombre indique combien de positions binaires sont dorénavant prévues pour la transmission de données dans l'autre canal utile (K1),
dans lequel le nombre prescrit (L0) associé au premier canal utile (K0) et le nombre prescrit (L1) associé au deuxième canal utile (K1) sont mis en mémoire dans l'unité utilisateur (20),
et dans lequel, après la fin de l'opération de transmission (HZ), aux fins de la transmission de données, le nombre de positions binaires défini par le premier nombre prescrit (L0) est utilisé dans le premier canal utile (K0) et le nombre de positions binaires défini par le deuxième nombre prescrit (L1) est utilisé dans le deuxième canal utile (K1).

2. Procédé selon la revendication 1, **caractérisé en ce qu'**un autre mot de données (64), dans le bloc de données (NR), est utilisé pour désigner les canaux utiles (K0 à K127) et **en ce que** sont désignés, dans le premier bloc de données, le premier canal utile (K0) et, dans le deuxième bloc de données, l'autre canal utile (K1).

3. Procédé selon l'une des revendications précédentes, **caractérisé en ce que** l'unité de commande (12) et l'unité utilisateur (20) constituent un réseau de transmission de données (10) avec une structure en anneau dans lequel les blocs de données (NR) sont transmis dans un sens.

4. Procédé selon la revendication 3, **caractérisé en ce que** le nombre de positions binaires transmises simultanément dans le réseau de transmission de données en anneau (10) est égal au nombre prédéterminé de positions binaires dans le bloc de données (NR).

5. Procédé selon la revendication 3 ou 4, **caractérisé en ce que** le retard dû à l'unité utilisateur est inférieur ou à peu près égal au temps entre l'émission de deux positions binaires successives du bloc de données (NR).

6. Procédé selon l'une des revendications précédentes, **caractérisé en ce que**, dans une deuxième partie (UZ2) de l'opération de transmission (HZ), deux blocs de données sont transmis,
un bloc de données contenant, en tant que paramètre de transmission, une longueur de trame utilisateur (LB0) qui indique combien de positions binaires sont dorénavant associées à une trame utilisateur (BR) dans le premier canal utile (K0) et
l'autre bloc de données contenant, en tant que paramètre de transmission, une longueur de trame utilisateur (LB1) qui indique combien de positions binaires sont dorénavant associées à une trame utilisateur (BR) dans l'autre canal utile (K1).

7. Procédé selon l'une des revendications précédentes, **caractérisé en ce que**, dans une troisième partie (UZ3) de l'opération de transmission (HZ), deux blocs de données sont transmis,
un bloc de données contenant, en tant que paramètre de transmission, une valeur modulo qui indique le reste entier d'une division du nombre total des blocs de données dans l'opération de transmission (HZ) par le produit de la longueur future de trame utilisateur (BR) du premier canal utile (K0) et du nombre futur de positions binaires (L0) dans le premier canal utile (K0) et
l'autre bloc de données contenant une valeur modulo qui indique le reste entier d'une division du nombre total des blocs de données dans l'opération de transmission (HZ) par le produit de la longueur future de trame utilisateur (BR) de l'autre canal utile (K1) et du nombre futur de positions binaires (L1) dans l'autre canal utile (K1).

8. Procédé selon l'une des revendications précédentes, **caractérisé en ce que**, dans une quatrième partie (UZ4) de l'opération de transmission (HZ), deux blocs de données sont transmis,
un bloc de données contenant, en tant que paramètre de transmission, un nombre de positions binaires qui indique un décalage entre un mot de données d'entrée (BRa) et un mot de données de sortie (BRb) dans le premier canal utile (K0) et
l'autre bloc de données contenant un nombre de positions binaires qui indique un décalage entre un mot de données d'entrée et un mot de données de sortie dans l'autre canal utile (K1).

9. Procédé selon l'une des revendications précédentes, **caractérisé en ce que** l'opération de transmission (HZ) est répétée cycliquement.

10. Procédé selon l'une des revendications précédentes, **caractérisé en ce que** le bloc de données (NR) contient un mot de données (c) dans lequel est désignée la partie actuelle (UZ1 à UZ4) de l'opération de transmission.

11. Procédé selon l'une des revendications précédentes, **caractérisé en ce qu'**un nombre prescrit (L) de positions binaires égal à zéro définit un canal utile (K0 à K127) non utilisé.

12. Réseau numérique de transmission de données (10) pour transmettre des données de commande et/ou de communication, en particulier pour exécuter le procédé selon l'une des revendications précédentes,

les données de communication étant transmises sur au moins deux canaux utiles (K0 à K127),
avec une unité de commande (12) et au moins une unité utilisateur (20),
des blocs de données (NR) avec un nombre prédéterminé de positions binaires étant transmis entre l'unité de commande (12) et l'unité utilisateur (20) et
l'unité de commande (12) spécifiant, pour les canaux utiles (K0 à K127), des paramètres de transmission (L, LB) qui sont mis en mémoire dans des cellules de mémoire (276 à 282) affectées aux canaux utiles (K0 à K127) dans l'unité utilisateur (20).

13. Réseau de transmission de données selon la revendication 12, **caractérisé en ce que** l'unité utilisateur contient, pour chaque canal utile, une mémoire pour stocker le nombre des futures positions binaires du canal utile.

14. Réseau de transmission de données selon la revendication 13, **caractérisé en ce que** les mémoires, côté sortie, sont respectivement reliées à la première entrée d'une unité d'addition et **en ce qu'**une autre entrée des unités d'addition, excepté l'une première unité d'addition, est reliée à la sortie de l'unité d'addition du canal voisin.

15. Réseau de transmission de données selon la revendication 13 ou 14, **caractérisé en ce que** l'unité utilisateur contient une autre mémoire intermédiaire qui, côté entrée, est reliée aux sorties des cellules de mémoire et/ou qui, côté entrée, est reliée aux sorties des unités d'addition.

# FIG 1

# FIG 2

Nutzdaten
68

Paket Modus

Kanäle

NR

# FIG 3

512  Netzrahmen NR

32 Netzrahmen NR = 1 Benutzerrahmen BR 1

BR 2    BR 3    BR 16    BR 17

$32 \times \dfrac{1}{192\,000}$ S

48 Netzrahmen = 1 Benutzerrahmen BR1'

t1    t2    BR 2'    t4    BR 11'    16    t7

Netzrahmen NR

# FIG 4

zum Gerät

BRa    BR    BR

vom Gerät

BRb    BR    BR

X Bitstellen    X Bitstellen    X Bitstellen

# FIG 5A

```
        ( Start )———200
            │
            ▼
┌─────────────────────────┐
│   Kanalanforderung      │———202
└─────────────────────────┘
            │
            ▼
┌─────────────────────────┐
│   Kanalauswahl          │———204
└─────────────────────────┘
            │
            ▼
┌─────────────────────────┐
│  Kanallänge L bestimmen │———206
└─────────────────────────┘
            │
            ▼
┌─────────────────────────┐
│   L ──► Liste           │———208
└─────────────────────────┘
            │
            ▼
┌──────────────────────────────┐
│ Benutzerrahmenlänge LB bestimmen │———210
└──────────────────────────────┘
            │
            ▼
┌─────────────────────────┐
│   LB ──► Liste          │———212
└─────────────────────────┘
            │
            ▼
┌─────────────────────────┐
│  LB- ((L* L)MOD LB      │———214
└─────────────────────────┘
            │
            ▼
┌─────────────────────────┐
│  Modulverg. ──► Liste   │———216
└─────────────────────────┘
            │
            ▼
┌─────────────────────────┐
│   Offset bestimmen      │———218
└─────────────────────────┘
            │
            ▼
┌─────────────────────────┐
│   Offset ──► Liste      │———220
└─────────────────────────┘
            │
            ▼
           (A)                        (B)
```

# FIG 5 B

(A)

Kanalnummer Kn:=0 — 222

L(Kn) aus Liste — 224

Rahmen mit Kn und L(Kn) senden — 226

Kn < 128 ? — 228

Kn:=Kn+1 — 230

UZ1

Sendeschleife für Rahmen mit Kn und LB(Kn) → 128 x — 232 UZ 2

Sendeschleife für Rahmen mit Kn und Modulverg.(Kn) — 234 UZ 3

Sendeschleife für Rahmen mit Kn und Offset (Kn) — 236 UZ 4

Ende — 238

Änderung ? — 240

(B)

## FIG 6